(19) **Europäisches Patentamt / European Patent Office / Office européen des brevets**

(11) **EP 4 715 372 A1**

(12) **EUROPEAN PATENT APPLICATION**
published in accordance with Art. 153(4) EPC

(43) Date of publication:
25.03.2026 Bulletin 2026/13

(21) Application number: 25801842.3

(22) Date of filing: 14.03.2025

(51) International Patent Classification (IPC):
*G01N 21/94* (2006.01)   *G01N 21/88* (2006.01)
*G01N 21/25* (2006.01)   *H01M 4/04* (2006.01)
*H01M 10/42* (2006.01)

(52) Cooperative Patent Classification (CPC):
G01N 21/25; G01N 21/88; G01N 21/94; H01M 4/04;
H01M 10/42; Y02E 60/10

(86) International application number:
PCT/KR2025/003322

(87) International publication number:
WO 2025/249722 (04.12.2025 Gazette 2025/49)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 28.05.2024  KR 20240069391

(71) Applicant: LG ENERGY SOLUTION, LTD.
Seoul 07335 (KR)

(72) Inventors:
• **GU, Jaejin**
  **Yuseong-gu, Daejeon 34122 (KR)**
• **KWON, Soon Hwan**
  **Yuseong-gu, Daejeon 34122 (KR)**

(74) Representative: **Goddar, Heinz J.**
**Boehmert & Boehmert
Anwaltspartnerschaft mbB
Pettenkoferstrasse 22
80336 München (DE)**

(54) **ELECTRODE SURFACE ANALYSIS METHOD AND ELECTRODE SURFACE ANALYSIS SYSTEM**

(57)     The present disclosure relates to a method and system for analyzing an electrode surface, and more specifically, to a method and system for analyzing an electrode surface that can precisely analyze foreign substances remaining on the electrode surface during an electrode manufacturing process using a hyperspectral CCD to increase process efficiency and product reliability.

[FIG. 1a]

**Description**

[Technical Field]

Cross-citation with Related Applications

This application claims the benefit of priority to Korean Patent Application No. 10-2024-0069391, filed on May 28, 2024.

Technical Field

The present disclosure relates to a method and system for analyzing an electrode surface, which are used in a process for manufacturing a secondary battery, for precisely analyzing foreign substances on the electrode surface.

[Related Art]

As the development and demand for mobile devices continue to grow, the demand for secondary batteries as power sources has also increased rapidly, and accordingly, extensive research has been conducted on secondary batteries to meet various requirements.

These secondary batteries are manufactured in such a way that the electrode assembly is embedded in the battery case along with the electrolyte. The electrode assembly is classfied into a stacked type, a folded type, or a stacked-folded type depending on the manufacturing method. In the case of stacked or stacked-folded type electrode assemblies, the unit assembly consists of a structure in which the positive electrode and negative electrode are stacked sequentially with a separator between them. To make these electrode assemblies, it is necessary to first manufacture positive and negative electrodes with electrode tabs formed.

The electrode process for manufacturing electrodes for a secondary battery includes (1) mixing process, (2) coating process, (3) rolling process, and (4) slitting and notching process, which are performed as an in-line process.

The (1) mixing process is a process for preparing a slurry for forming the active material layer of the electrode. Slurries can be prepared by weighing and mixing the various raw materials needed to form the active layer, including electrode active materials, binders, and conductive materials.

Furthermore, the (2) coating process is a process in which the slurry is thinly coated on the current collector and dried to form an electrode active material layer. The term "electrode sheet" refers to a structure including a current collector and an electrode active material layer formed on the current collector.

Furthermore, the (3) rolling process is a process of uniformly flattening the electrode sheet by passing it between two rolls. The rolling process is also known as the roll pressing process.

In addition, the (4) slitting and notching process is the process of cutting the electrode sheet to fit the battery size. The slitting process may cut the battery sheet lengthwise to meet the battery design specifications. The notching process is a process of forming the V-groove and an electrode tab after the slitting process. In the notching process, the electrode sheet is generally placed on a die, and a portion of the electrode sheet may be punched using a press, or an electrode tab may be formed by etching. Meanwhile, a small pouch line may have an etching process between the rolling and slitting processes.

However, foreign substances from this etching process can remain on the surface of the electrode, degrading the quality of the electrode. If the types and residual amounts of foreign substances remaining on the surface of the electrode can be identified, the etching process may be designed and implemented to minimize the generation of of these substances. In this context, foreign substances may refer to residues such as binders contained in the active material layer of the electrode.

Generally, vision is utilized on inline equipment for inline processes for electrode manufacturing to check for residual foreign substances. However, the vision has a large field of view (FOV), so it can only detect the presence or absence of residual foreign substances, and it is difficult to accurately identify their types and residual amounts. The electrode etching process is performed as an inline process, and due to the limitations of inline equipment, a vision had to be installed, and furthermore, there were technical constraints in installing a more precise camera capable of analyzing foreign substances, other than the vision.

Therefore, it is necessary to develop a technology for analyzing an electrode surface that can identify the types and residual amounts of foreign substances remaining on the electrode surface after the etching process.

[Prior Art Reference]

(Patent Reference 1) Korean Laid-open Patent Publication No. 2011-0029011

[Detailed Description of the Invention]

[Technical Problem]

The inventors of the present disclosure conducted a multifaceted study to solve the above problem and found that by introducing a hyperspectral CCD (Charge Coupled Device) as an offline equipment in addition to vision, which is an inline equipment provided in the inline process for manufacturing electrodes, it is possible to analyze the electrode surface more precisely.

Accordingly, it is an object of the present disclosure to provide a method for analyzing an electrode surface using a hyperspectral CCD.

Another object of the present disclosure is to provide a system for analyzing an electrode surface using a hyperspectral CCD.

[Technical Solution]

To accomplish the above objectives, the present disclosure provides a method for analyzing an electrode surface using a hyperspectral charge coupled device (CCD), comprising:

(a) photographing an electrode surface with a hyperspectral CCD to obtain a spectrum of the electrode surface;
(b) visualizing the electrode surface, using a spectrum of the electrode surface; and
(c) quantifying the visualized electrode surface,

wherein the electrode surface is analyzed by calculating a discrimination factor ($T_{A/B}$) from a spectrum of the electrode surface obtained in step (a) using Formula 1 below; separating the electrode surface based on an intensity of brightness of the electrode surface corresponding to the discrimination factor ($T_{A/B}$); and visualizing and quantifying separated individual regions.

<Formula 1>

$$T_{A/B} = \frac{\mu_A - \mu_B}{\sigma_A - \sigma_B}$$

wherein A and B are any two different substances present on the surface of the electrode,
$T_{A/B}$ is the discrimination factor between A and B,
$\mu$ is an average of a plurality of intensities of brightness corresponding to a plurality of wavelengths in the electrode surface spectrum, and $\sigma$ is a deviation of the plurality of intensities of brightness corresponding to the plurality of wavelengths.

In one example of the present disclosure, the present disclosure provides a method for analyzing an electrode surface, wherein A and B are each a different material selected from a group that includes a current collector, an electrode active material layer, and foreign substances.

In one example of the present disclosure, a method for analyzing an electrode surface is provided, wherein the individual regions include a surface region of a current collector, a surface region of an electrode active material layer, and a foreign substance region.

In one example of the present disclosure, in step (b), different visually distinct colors are matched for the individual regions identified in step (a), and the regions are visualized as represented by the matched colors.

In one example of the present disclosure, in step (c), the electrode surface is quantified by calculating a proportion of pixels in each individual region included in the electrode surface, relative to the total pixels of the electrode surface visualized in step (b).

One example of the present disclosure provides a method for analyzing an electrode surface, wherein the hyperspectral CCD inspects foreign substances in any specific area of the electrode surface.

One example of the present disclosure provides a method for analyzing an electrode surface, wherein a field of view (FOV) of the specific area includes an area of 0.1 mm to 5 mm in width and 0.1 mm to 5 mm in length.

In one example of the present disclosure, a method for analyzing an electrode surface is provided, wherein the electrode is an electrode after the electrode etching process that forms an electrode tab during an electrode manufacturing process.

The present disclosure further provides a system for analyzing an electrode surface, comprising a hyperspectral CCD part for photographing an electrode surface using a hyperspectral CCD to obtain a spectrum of the electrode surface;

a visualization part for visualizing the electrode surface using a spectrum of the electrode surface; and
a quantification part for quantifying the visualized electrode surface,
wherein the electrode surface is analyzed by calculating a discrimination factor ($T_{A/B}$) from a spectrum of the electrode surface obtained in the hyperspectral CCD part, using the Formula 1 below; separating the electrode surface based on an intensity of brightness of electrode surface corresponding to the discrimination factor ($T_{A/B}$); and visualizing and quantifying separated individual regions.

<Formula 1>

$$T_{A/B} = \frac{\mu_A - \mu_B}{\sigma_A - \sigma_B}$$

wherein A and B are any two different substances present on the surface of the electrode,
$T_{A/B}$ is the discrimination factor between A and B,
$\mu$ is an average of a plurality of intensities of brightness corresponding to a plurality of wavelengths in the electrode surface spectrum, and $\sigma$ is a deviation of the plurality of intensities of brightness corresponding to the plurality of wavelengths.

[Advantageous Effects]

According to the present disclosure, in the process of manufacturing electrodes for secondary batteries, the type and amount of foreign substances present on the electrode surface after the etching process for forming the electrode tab can be analyzed more precisely, thereby improving the process efficiency and product reliability of the electrodes manufactured. Also, the ability to precisely analyze foreign substances can also be used to check the performance of the equipment used in the etching process, such as the etching laser.

[Brief Description of Drawing]

FIGs. 1a to 1c are schematic diagrams illustrating the process of obtaining a discrimination factor using Formula 1 from electrode surface spectra obtained by a hyperspectral CCD.
FIG. 2 shows the correlationship between wavelength and intensity of brightness that can be obtained from images taken with a hyperspectral CCD.
FIG. 3 shows individual spectra of the current collector surface, electrode active layer surface, and foreign substances contained on the negative electrode surface taken with a hyperspectral CCD.

[Best Mode]

Hereinafter, the present disclosure will be described in more detail to provide a better understanding.
The terms and words used in this specification and claims are not to be construed in their ordinary or dictionary sense, but rather in a sense and concept consistent with the technical idea of the present disclosure, based on the principle that the inventor may define the concept of a term as he/her sees fit to best describe his/her invention.
As used herein, the term "analyzing an electrode surface" means to detect or measure the substances constituting the electrode surface to derive the types and amounts thereof. As used herein, the electrode subjected to surface analysis may be an electrode after the etching process in the course of the electrode manufacturing process. Etching process means a process in which the electrode active material layer is removed by etching the electrode active material layer from the electrode on which the current collector and electrode active material layer are formed during the electrode manufacturing process to form an electrode tab. Thus, after the etching process, the electrode surface may include the surface of the current collector, the surface of the electrode active material layer, and foreign substances. The foreign substance may be a binder contained in the electrode active material layer. Ultimately, the electrode surface analysis may be intended to analyze the types and amounts of foreign substances contained on the electrode surface. In this case, the electrode active material layer is formed by coating on the current collector, so it can also be called an electrode coating layer.

## Method for analyzing an electrode surface

The present disclosure relates to a method for analyzing an electrode surface.

The method for analyzing an electrode surface according to the present disclosure, using a hyperspectral charge coupled device (CCD), comprises:

(a) photographing an electrode surface with a hyperspectral CCD to obtain a spectrum of the electrode surface;
(b) visualizing the electrode surface, using a spectrum of the electrode surface; and
(c) quantifying the visualized electrode surface,

wherein the electrode surface is analyzed by calculating a discrimination factor ($T_{A/B}$) from a spectrum of the electrode surface obtained in step (a) using the formula 1 below; separating the electrode surface based on the intensity of brightness of the electrode surface corresponding to the discrimination factor ($T_{A/B}$); and visualizing and quantifying the separated individual regions.

<Formula 1>

$$T_{A/B} = \frac{\mu_A - \mu_B}{\sigma_A - \sigma_B}$$

wherein A and B are any two different substances present on the surface of the electrode,
$T_{A/B}$ is the discrimination factor between A and B,
$\mu$ is the average of a plurality of intensities of brightness corresponding to a plurality of wavelengths in the electrode surface spectrum, and $\sigma$ is the deviation of the plurality of intensities of brightness corresponding to the plurality of wavelengths.

A and B may each comprise a different material selected from the group consisting of a current collector, an electrode active material layer, and foreign substances. More specifically, A and B may comprise a surface of the current collector, a surface of the electrode active material, and foreign substances such as a binder, respectively.

In the present disclosure, in step (a), the electrode surface may be photographed using a hyperspectral CCD to obtain a spectrum of the electrode surface.

A hyperspectral CCD is a type of camera that can measure hyperspectral images (HSI). While RGB has three channels, HSI can measure a wide range of wavelengths, up to 200 spectral bands. For this, HSI detects complex features that are not found in RGB images. While RGB images have only spatial features, HSI has both spectral and spatial features, which makes it perform well for classification. As such, HSI is capable of fine-grained classification of even similar colors, making it widely applicable in a variety of fields, including remote sensing.

In one example of the present disclosure, the hyperspectral CCD can be applied to electrode surface analysis to provide a more precise analysis of the electrode surface.

The hyperspectral CCD comprises: (i) an optical part for scanning and measuring an object to be measured; (ii) a spectral part for spectralizing light received in the optical part; and (iii) a detection part for converting the spectralized light into a spectrum.

The (i) optical part includes an optical lens. Using the optical lens, the electrode surface to be measured can be scanned and measured. Light is received from the electrode surface through the optical lens. The wavelengths of the received light may vary depending on the nature of the electrode surface, the presence of foreign substances, and the types and amounts thereof.

Further, the (ii) spectral part comprises a dispersive element for spectroscoping light.

Furthermore, the (iii) detection part is also referred to as a sensor part and can convert the spectralized light into a spectrum.

In one example of the present disclosure, the hyperspectral CCD can precisely inspect or measure any specific area included on the electrode surface.

The field of view (FOV) of the specific area can inspect or measure a narrow area of 0.1 mm to 5 mm in width and 0.1 mm to 5 mm in length.

The FOV of conventional vision cameras can only inspect or measure a large area of 400 mm in width and 400 mm in length, resulting in poor precision. As such, conventional vision cameras have a large FOV and can only check the presence or absence of foreign substances on the electrode surface, making it difficult to precisely analyze the types and amounts of foreign substances.

In Formula 1, the electrode surface spectrum may be an integrated spectrum of superimposed individual spectra, according to one example of the present disclosure.

In the integrated spectrum, there was an issue with the accuracy of the discrimination criterion which was arbitrarily selected by the measurer. However, by calculating the discrimination factor using Formula 1 and using it as a discrimination criterion, it is possible to more precisely distinguish, visualize, and quantify the arbitrary substances contained on the electrode surface, and thus analyze the amount and/or type of these substances.

Furthermore, Formula 1 can be interpreted that the larger the gap in intensity of brightness between any of the above substances, and the smaller the gap, the higher the discrimination factor.

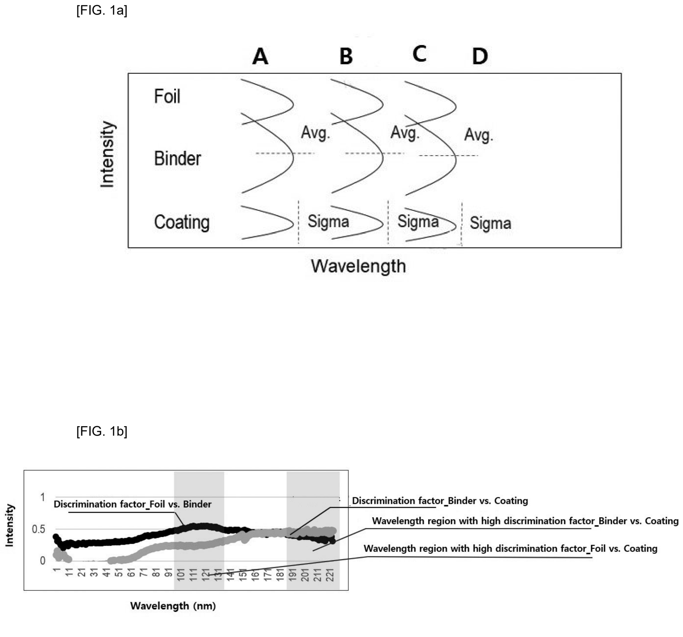

FIGs. 1a to 1c are schematic diagrams illustrating the process of obtaining a discrimination factor using Formula 1 from electrode surface spectra obtained by a hyperspectral CCD.

FIG. 1a illustrates a graph for calculating the average ($\mu$, Avg.) and deviation ($\sigma$, sigma) in the electrode surface spectrum obtained by a hyperspectral CCD, for any substance, calculated using a plurality of intensities of brightness corresponding to a plurality of wavelengths. These arbitrary substances are a current collector (foil), a foreign substance (binder), and an electrode active material (coating). Averages and deviations can be calculated by using a plurality of intensities of brightness corresponding to a plurality of wavelengths. The average and deviation calculated using the plurality of intensities of brightness can be substituted into Formula 1 to calculate the discrimination factor ($T_{A/B}$).

For example, as shown in FIG. 1a, the wavelengths are divided into regions A, B, C, and D, a plurality of specific wavelengths are selected within each region, the average (Avg.) and deviation (Sigma) of the intensities of brightness are calculated by using a plurality of intensities of brightness corresponding to the selected wavelengths, and these values are applied to formula 1 to obtain the discrimination factor.

FIG. 1b is a graph of the discrimination factor as a function of wavelength. It shows a graph of the discrimination factor ($T_{A/B}$) calculated using a plurality of intensities of brightness corresponding to the plurality of wavelengths.

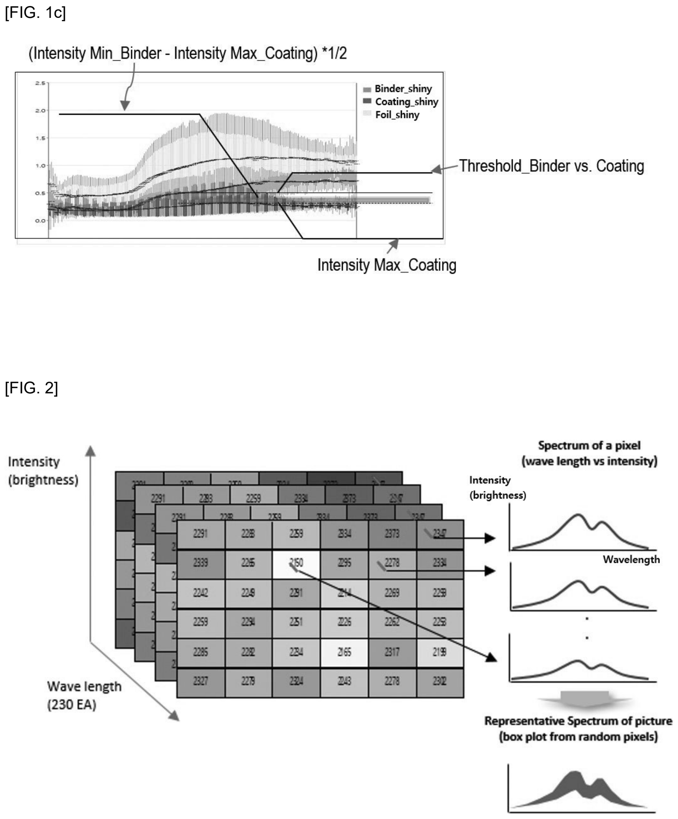

FIG. 1c is a graph showing that the discrimination factor ($T_{A/B}$) values between each arbitrary substance in the selected wavelength range is selected as the final discrimination criterion. The front and back sides of the foil can be identified as the shiny side and the matte side, respectively. Thus, Binder_shiny, Coating_shiny, and Foil_shiny refer to the binder and coating based on the front side of the foil.

In one example of the present disclosure, the individual region of the electrode surface can be distinguished based on the discrimination factor. For example, the individual regions divided on the electrode surface may include the surface region of the current collector, the surface region of the electrode active material layer, and the foreign substance region.

In the present disclosure, in step (b), the electrode surface can be visualized using a spectrum of the electrode surface.

In step (a), different visually distinct colors may be matched for the divided individual regions. In this case, the matching colors are not particularly limited to specific colors, as long as the individual regions can be visually distinguished from one another using different colors.

In this case, the visualization means representing individual regions of the electrode surface, each with a different color match. The visualization may be implemented with a visualization software program, and is not particularly limited, as long as the software program is driven by logic capable of representing each individual region distinguished by the discrimination criteria on the electrode surface with matched colors.

In the present disclosure, in step (c), the visualized electrode surface can be quantified.

Specifically, the electrode surface can be quantified by calculating the proportion of pixels corresponding to each of the individual regions based on the total pixels of the visualized electrode surface. In particular, by calculating the proportion of pixels contained in the individual region corresponding to the identified foreign substances, the amount of each foreign substances remaining on the electrode surface can be obtained.

The quantification may be performed by a quantification software program, and is not particularly limited, as long as the software program is driven by logic that calculates the proportion of pixels corresponding to each component based on the total pixels on the electrode surface.

**System for analyzing an electrode surface**

The present disclosure also relates to a system for analyzing an electrode surface.

The system for analyzing an electrode surface according to the present disclosure, comprises: a hyperspectral CCD part for photographing an electrode surface; a visualization part for visualizing the electrode surface using a spectrum of the electrode surface imaged by the hyperspectral CCD; and a quantification part for quantifying the visualized electrode surface,

wherein the electrode surface is analyzed by calculating a discrimination factor ($T_{A/B}$) from a spectrum of the electrode surface obtained in the hyperspectral CCD part, using the formula 1 below; separating the electrode surface based on the intensity of brightness of the electrode surface corresponding to the discrimination factor ($T_{A/B}$); and visualizing and quantifying the separated individual regions.

<Formula 1>

$$T_{A/B} = \frac{\mu_A - \mu_B}{\sigma_A - \sigma_B}$$

wherein A and B are any two different substances present on the surface of the electrode,
$T_{A/B}$ is the discrimination factor between A and B,
$\mu$ is the average of a plurality of intensities of brightness corresponding to a plurality of wavelengths in the electrode surface spectrum, and $\sigma$ is the deviation of the plurality of intensities of brightness corresponding to the plurality of wavelengths.

The hyperspectral CCD part may comprise a hyperspectral CCD.

Furthermore, the visualization part may comprise a visualization software program, and is not particularly limited, as long as the software program is driven by logic capable of representing each region of components distinguished by the discrimination criteria on the electrode surface with matched colors.

Further, the quantification part may comprise a quantification software program, and is not particularly limited, as long as the software program is driven by logic that calculates the proportion of pixels corresponding to each component based on the total pixels on the electrode surface.

According to a preferred example of the present disclosure, since the correlation between wavelength and intensity of brightness was obtained from the image taken by the hyperspectral CCD (Fig. 2), the spectrum of the negative electrode surface was obtained and analyzed as shown below. The correlation between wavelength and intensity of brightness is also referred to as the spectrum of a pixel.

(1) Obtaining of a spectrum for the negative electrode surface

Using a hyperspectral CCD (Hyper Spectral Camera, Manufactured by Mitutoyo), the electrode surface after the etching process to form an electrode tab during the electrode manufacturing process was photographed. The electrode is a negative electrode, comprising a Cu current collector and a negative electrode active material layer formed on one surface of the Cu current collector. The surface of the negative electrode includes the surface of the Cu current collector (bare foil), the binder separated from the negative electrode active material layer (binder residue), and the negative electrode active material layer (coating).

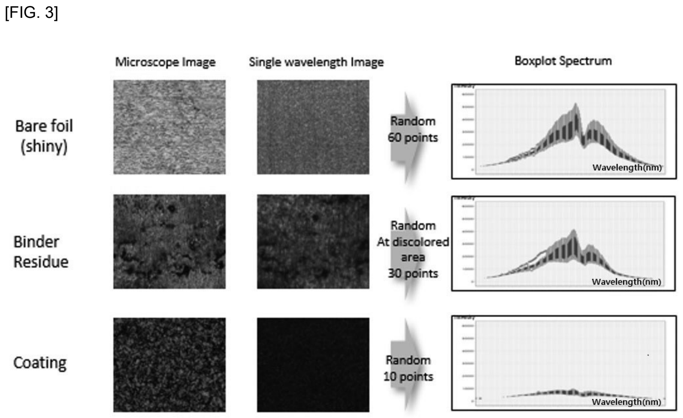

From the negative electrode surface images taken with the hyperspectral CCD, individual spectra were obtained for bare foil, binder residue, and coating (FIG. 3). The individual spectra were obtained from raw data obtained from hyperspectral CCD images and realized as boxplot spectra. Microscope images are taken with an optical microscope, and single wavelength images are taken with a single wavelength spectrophotometer.

(2) Establishment of classification criteria for foreign substances on the negative electrode surface

After obtaining the integrated spectrum that integrates the individual spectra of bare foil, binder residue, and coating, the discrimination factor was calculated using Formula 1.

First, from the individual spectrum included in the integrated electrode surface spectrum, the average ($\mu$) and deviation ($\sigma$) of the intensities of brightness were calculated by using a plurality of intensities of brightness corresponding to a plurality of wavelengths. Using the intensity of brightness corresponding to the plurality of wavelengths, the average ($\mu$) and deviation ($\sigma$) of the intensity of brightness were obtained respectively, and applied to Formula 1 to obtain a plurality of discrimination factors ($T_{A/B}$).

The wavelength region corresponding to the largest value of the plurality of discrimination factors ($T_{A/B}$) was selected, and the average or median value of the intensity of brightness of the brightness region corresponding to the wavelength region was selected as a threshold.

For example, the final threshold is: foil > 1.2, 1.2 > binder > 0.8, 0.9 > coating.

The negative electrode surface was categorized using the above threshold.

Table 1 below is a categorization of the negative electrode surface classified using the threshold.

[Table 1]

| Identification of the negative electrode surface | Threshold |
|---|---|
| Foil | foil > 1.2 |
| Binder | 1.2 > binder > 0.8 |
| Coating | 0.9 > coating |

As shown in Table 1 above, based on the threshold, the negative electrode surface and its matching color can be defined. The colors are not particularly limited, as long as they are colors that can visually distinguish the negative electrode surface separated by the threshold.

(3) Visualization of the negative electrode surface

The negative electrode surface was visualized using a negative electrode surface containing the individual regions identified by the threshold and their matching colors. In this case, the visualization was performed using a software program driven by logic that makes the visualization object, i.e., the individual regions, to be represented by specific colors.

(4) Quantification of the negative electrode surface

By the quantification method, the number of pixels corresponding to bare foil, binder residue, and coating were each measured on the visualized negative electrode surface, and the proportion of the total number of pixels on the negative electrode surface was calculated. In this case, the quantification was performed by a software program driven by logic capable of calculating the proportion of the pixels corresponding to a specific region, i.e., an individual region, included in the quantification object based on the total pixels of the quantification object, i.e., the negative electrode surface.

Table 2 below shows a quantification of the negative electrode surface including the individual regions, i.e., bare foil, binder, and coating. Noise refers to an unidentifiable substance, and discriminability was diminished because distinguishing substances in a wavelength range where the brightness intensity differences were not significant.

[Table 2]

| | Pixel quantity (Number) | Ratio (%) |
|---|---|---|
| Foil | 1,047,713 | 99.94 |
| Binder | 678 | 0.06 |
| Coating | 0 | 0.00 |
| Total | 1,048,391 | 100.0 |
| Noise: 0.06% | | |

As a comparative implementing example according to the present disclosure, the electrode surface analysis was performed in the same way as in the above example, except that instead of the discrimination factor calculated using Formula 1, a region with a large difference in intensity of brightness between the foil, binder, and coating arbitrarily selected by the measurer from the integrated electrode surface spectrum was used as the discrimination criterion.

[Table 3]

| | Pixel quantity (Number) | Ratio (%) |
|---|---|---|
| Foil | 1,046,402 | 99.79 |
| Binder | 2,174 | 0.06 |
| Coating | 0 | 0.00 |
| Total | 1,048,576 | 100.0 |
| Noise: 0.21% | | |

Referring to Tables 2 and 3, it can be seen that the incidence of noise in Example 1, where the electrode surface analysis was performed using the discrimination factor calculated from Formula 1, was reduced.

Although the present disclosure has been described above by way of limited examples and drawings, the disclosure is not limited thereby, and various modifications and variations may be made by those having ordinary skill in the art, within the technical idea of the disclosure and the equivalent scope of the patent claims set forth below.

**Claims**

1. A method for analyzing an electrode surface, using a hyperspectral charge coupled device (CCD), comprising:

   (a) photographing an electrode surface with a hyperspectral CCD to obtain a spectrum of the electrode surface;
   (b) visualizing the electrode surface, using a spectrum of the electrode surface; and
   (c) quantifying the visualized electrode surface,

   wherein the electrode surface is analyzed by calculating a discrimination factor ($T_{A/B}$) from a spectrum of the electrode surface obtained in step (a) using Formula 1 below; separating the electrode surface based on an intensity of brightness of the electrode surface corresponding to the discrimination factor ($T_{A/B}$); and visualizing and quantifying separated individual regions,

   <Formula 1>

   $$T_{A/B} = \frac{\mu_A - \mu_B}{\sigma_A - \sigma_B}$$

   wherein A and B are any two different substances present on the surface of the electrode,
   $T_{A/B}$ is the discrimination factor between A and B,
   $\mu$ is an average of a plurality of intensities of brightness corresponding to a plurality of wavelengths in the electrode surface spectrum, and $\sigma$ is a deviation of the plurality of intensities of brightness corresponding to the plurality of wavelengths.

2. The method for analyzing an electrode surface according to claim 1,
   wherein A and B are each a different material selected from a group that includes a current collector, an electrode active material layer, and foreign substances.

3. The method for analyzing an electrode surface according to claim 1,
   wherein the individual regions comprises a surface region of a current collector, a surface region of an electrode active material layer, and a foreign substance region.

4. The method for analyzing an electrode surface according to claim 1,
   wherein, in step (b), different visually distinct colors are matched for the individual regions identified in step (a), and the regions are visualized as represented by the matched colors.

5. The method for analyzing an electrode surface according to claim 1,
   wherein, in step (c), the electrode surface is quantified by calculating a proportion of pixels in each individual region included in the electrode surface, relative to total pixels of the electrode surface visualized in step (b).

6. The method for analyzing an electrode surface according to claim 1,
   wherein the hyperspectral CCD inspects foreign substances in any specific area of the electrode surface.

7. The method for analyzing an electrode surface according to claim 6,
   wherein a field of view (FOV) of the specific area comprises an area of 0.1 mm to 5 mm in width and 0.1 mm to 5 mm in length.

8. The method for analyzing an electrode surface according to claim 1,
   wherein the electrode is an electrode after the electrode etching process that forms an electrode tab during an electrode manufacturing process.

9. A system for analyzing an electrode surface, comprising a hyperspectral CCD part for photographing an electrode surface using a hyperspectral CCD to obtain a spectrum of the electrode surface;

a visualization part for visualizing the electrode surface using a spectrum of the electrode surface; and
a quantification part for quantifying the visualized electrode surface,
wherein the electrode surface is analyzed by calculating a discrimination factor ($T_{A/B}$) from a spectrum of the electrode surface obtained in the hyperspectral CCD part, using Formula 1 below; separating the electrode surface based on an intensity of brightness of the electrode surface corresponding to the discrimination factor ($T_{A/B}$); and visualizing and quantifying separated individual regions,

<Formula 1>

$$T_{A/B} = \frac{\mu_A - \mu_B}{\sigma_A - \sigma_B}$$

wherein A and B are any two different substances present on the surface of the electrode,
$T_{A/B}$ is the discrimination factor between A and B,
$\mu$ is an average of a plurality of intensities of brightness corresponding to a plurality of wavelengths in the electrode surface spectrum, and $\sigma$ is a deviation of the plurality of intensities of brightness corresponding to the plurality of wavelengths.

[FIG. 1a]

[FIG. 1b]

[FIG. 1c]

(Intensity Min_Binder - Intensity Max_Coating) *1/2

Threshold_Binder vs. Coating

Intensity Max_Coating

[FIG. 2]

[FIG. 3]

## INTERNATIONAL SEARCH REPORT

| International application No. |
|---|
| **PCT/KR2025/003322** |

| A. | CLASSIFICATION OF SUBJECT MATTER |
|---|---|

G01N 21/94(2006.01)i; G01N 21/88(2006.01)i; G01N 21/25(2006.01)i; H01M 4/04(2006.01)i; H01M 10/42(2006.01)i

According to International Patent Classification (IPC) or to both national classification and IPC

| B. | FIELDS SEARCHED |
|---|---|

Minimum documentation searched (classification system followed by classification symbols)

G01N 21/94(2006.01); G01J 3/02(2006.01); G01J 3/28(2006.01); G01N 21/17(2006.01); G01N 21/25(2006.01); G06T 7/00(2006.01); H01M 10/42(2006.01); H01M 4/04(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전극(electrode), 표면(surface), 초분광(hyperspectral), 이미지(image), 스펙트럼 (spectrum), 파장(wavelength), 광도(intensity of brightness), 매칭(matching)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | KR 10-2561029 B1 (GREEN OPTICS CO., LTD.) 31 July 2023 (2023-07-31)<br>paragraphs [0070]-[0176], claims 1, 11 and figures 1-3 | 1-9 |
| A | KR 10-2023-0057650 A (SAMSUNG ELECTRONICS CO., LTD. et al.) 02 May 2023 (2023-05-02)<br>paragraphs [0091]-[0108], claim 7 and figures 8-12 | 1-9 |
| A | KR 10-2019-0084470 A (LG CHEM, LTD.) 17 July 2019 (2019-07-17)<br>paragraph [0059] and figure 2 | 1-9 |
| A | KR 10-2023-0146653 A (SIEMENS AKTIENGESELLSCHAFT) 19 October 2023 (2023-10-19)<br>paragraphs [0028]-[0035], claim 1 and figures 1-3 | 1-9 |
| A | KR 10-1922831 B1 (UNIVERSITY OF SEOUL INDUSTRY COOPERATION FOUNDATION) 27 November 2018 (2018-11-27)<br>paragraphs [0034]-[0133], claim 1 and figures 1-5, 10 | 1-9 |

| ☐ Further documents are listed in the continuation of Box C. | ☑ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **13 June 2025** | **13 June 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2025/003322**

| Patent document cited in search report | | | Publication date (day/month/year) | Patent family member(s) | | | Publication date (day/month/year) |
|---|---|---|---|---|---|---|---|
| KR | 10-2561029 | B1 | 31 July 2023 | None | | | |
| KR | 10-2023-0057650 | A | 02 May 2023 | CN | 116012280 | A | 25 April 2023 |
| | | | | EP | 4174459 | A1 | 03 May 2023 |
| | | | | JP | 2023-063240 | A | 09 May 2023 |
| | | | | JP | 7429931 | B2 | 09 February 2024 |
| | | | | US | 11962921 | B2 | 16 April 2024 |
| | | | | US | 12212864 | B2 | 28 January 2025 |
| | | | | US | 2023-0128654 | A1 | 27 April 2023 |
| | | | | US | 2024-0251181 | A1 | 25 July 2024 |
| KR | 10-2019-0084470 | A | 17 July 2019 | CN | 110418956 | A | 05 November 2019 |
| | | | | CN | 110418956 | B | 11 March 2022 |
| | | | | EP | 3674687 | A1 | 01 July 2020 |
| | | | | US | 11448597 | B2 | 20 September 2022 |
| | | | | US | 2020-0240915 | A1 | 30 July 2020 |
| | | | | WO | 2019-135508 | A1 | 11 July 2019 |
| KR | 10-2023-0146653 | A | 19 October 2023 | CA | 3208845 | A1 | 01 September 2022 |
| | | | | CN | 116888757 | A | 13 October 2023 |
| | | | | CN | 116941094 | A | 24 October 2023 |
| | | | | EP | 4050680 | A1 | 31 August 2022 |
| | | | | EP | 4050695 | A1 | 31 August 2022 |
| | | | | EP | 4060765 | A1 | 21 September 2022 |
| | | | | EP | 4060766 | A1 | 21 September 2022 |
| | | | | EP | 4275240 | A1 | 15 November 2023 |
| | | | | EP | 4275244 | A1 | 15 November 2023 |
| | | | | JP | 2024-514231 | A | 29 March 2024 |
| | | | | US | 2024-0133819 | A1 | 25 April 2024 |
| | | | | US | 2024-0230546 | A9 | 11 July 2024 |
| | | | | US | 2024-0303800 | A1 | 12 September 2024 |
| | | | | WO | 2022-179807 | A1 | 01 September 2022 |
| | | | | WO | 2022-179808 | A1 | 01 September 2022 |
| | | | | WO | 2022-179810 | A1 | 01 September 2022 |
| | | | | WO | 2022-179811 | A1 | 01 September 2022 |
| KR | 10-1922831 | B1 | 27 November 2018 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240069391

- KR 20110029011